Europäisches Patentamt

European Patent Office

Office européen des brevets

(19)

(11) Numéro de publication : **0 412 013 B1**

(12) **FASCICULE DE BREVET EUROPEEN**

(45) Date de publication du fascicule du brevet :
**22.07.92 Bulletin 92/30**

(51) Int. Cl.⁵ : **G01V 1/30**

(21) Numéro de dépôt : **90402207.6**

(22) Date de dépôt : **01.08.90**

(54) Procédé de traitement de données de sismique réflexion pour l'obtention de coupes sismiques.

(30) Priorité : **04.08.89 FR 8910519**

(43) Date de publication de la demande :
**06.02.91 Bulletin 91/06**

(45) Mention de la délivrance du brevet :
**22.07.92 Bulletin 92/30**

(84) Etats contractants désignés :
**AT BE CH DE DK ES FR GB GR IT LI LU NL SE**

(56) Documents cités :
**GB-A- 1 065 980**
**US-A- 2 941 184**
**US-A- 3 129 404**

(73) Titulaire : **SOCIETE NATIONALE ELF AQUITAINE (PRODUCTION)**
**Tour Elf, 2, Place de la Coupole, La Défense 6 F-92400 Courbevoie (FR)**

(72) Inventeur : **Keskes, Naamen**
**17 rue du Parc Résidence**
**F-64140 Lons (FR)**
Inventeur : **Boronad, Patricia**
**Résidence La Falémé, 114 Avenue Montardon**
**F-64000 Pau (FR)**
Inventeur : **Verprat, Marc**
**4 Boulevard des Pyrénées**
**F-64000 Pau (FR)**
Inventeur : **Sibille, Georges**
**681 Route de Narbonne**
**F-38950 Saint Martin Le Vinoux (FR)**

(74) Mandataire : **Boillot, Marc**
**SOCIETE NATIONALE ELF AQUITAINE**
**Division Propriété Industrielle Tour Elf**
**F-92078 Paris la Défense Cédex 45 (FR)**

EP 0 412 013 B1

Jouve, 18, rue Saint-Denis, 75001 PARIS

## Description

La présente invention concerne un procédé de traitement de données de sismique réflexion pour une meilleure connaissance de la structure des couches géologiques d'un milieu à explorer.

De façon très générale, on considère en géophysique que le sous-sol est constitué d'un empilement de couches géologiques de caractéristiques différentes qui s'organisent dans l'espace suivant une certaine géométrie.

Pour définir la géométrie des couches du sous-sol, les spécialistes de l'exploration du sous-sol, en particulier les géophysiciens en exploration pétrolière, utilisent une technique particulière, appelée "sismique réflexion", qui consiste à émettre en différents points de la surface du sol appelés points émetteurs des signaux acoustiques, à recevoir ensuite en différents points de la surface du sol appelés points récepteurs lesdits signaux après qu'ils se soient propagés dans le sous-sol et se soient réfléchis sur les frontières acoustiques particulières que constituent les limites entre couches géologiques différentes et que l'on appelle réflecteurs. Chacun des enregistrements élémentaires fonction du temps et associé à un point émetteur et un point récepteur donnés constitue ce qu'on appelle une "trace".

Pour une même émission, on enregistre simultanément en différents points récepteurs et pendant un temps prédéfini, les signaux réfléchis par les différents réflecteurs du sous-sol, cette technique permettant de regrouper en collections des traces portant des informations redondantes.

Les traces enregistrées sont traitées pour obtenir des images particulières du sous-sol appelées "sections sismiques", que l'on peut assimiler à des plans de coupe verticale du sous-sol sur lesquelles les réflecteurs apparaissent comme des linéations superposées les unes aux autres. La technique de traitement communément employée consiste à sommer entre les traces de chaque collection après leur avoir appliqué un certain nombre de corrections et obtenir ainsi une "trace somme" associée à un point de la surface particulier. Le choix des collections et les corrections sont basées sur des hypothèses simplificatrices portant en particulier sur la structure géométrique des couches du sol, celles-ci étant supposées être horizontales et homogènes. Dans ce cas, le point de réflexion du signal se situe sur une verticale passant par le point milieu du segment joignant les points d'émission et de réception à la surface du sol. Chacune des collections sera alors constituée de l'ensemble des traces associées à un même point milieu. On applique à chacune des traces au moins une correction, dite "correction dynamique" qui a pour but, à partir de dilatation de l'échelle temps, de corriger les effets d'obliquité des trajets émetteur-réflecteur-récepteur, différents pour chacune des traces d'une même collection, pour obtenir la trace que l'on avait directement obtenue sur le terrain si l'émetteur et le récepteur avait été confondus en un même point à la surface du sol.

Tous les traitements appliqués de façon routinière actuellement en sismique réflexion consistent à concentrer l'information redondante portée par des collections sur une trace somme unique, en sommant horizontalement toutes les traces d'une même collection, un échantillon de la trace somme étant le résultat de la sommation, pondérée ou non, des N échantillons au même temps appartenant chacun à une trace élémentaire différente, N étant le nombre de ces traces.

L'hypothèse d'horizontalité des couches, si elle n'est pas pleinement justifiée, conduit d'une part à une déformation géométrique notable de l'image du sous-sol, parce qu'opérant en couverture multiple on situe à la verticale du point milieu des informations qui proviennent des points qui ne sont pas sur cette verticale, et d'autre part à une baisse de résolution, parce qu'on somme des informations qui proviennent non pas du même point -ce qui est le cas si les hypothèses sont satisfaites- mais de points du sous-sol différents, ce qui a pour effet de dégrader le signal. Cette déformation et cette dégradation peuvent être notables au point de fausser l'interprétation qui est faite ensuite de ces sections sismiques, surtout dans le cas de géométrie agitée du sous-sol ou de structures fines pour lesquelles une haute résolution est nécessaire. Différents traitements existent, appelés migrations, qui ont tous pour but de restituer une image aussi exacte que possible du sous-sol, en replaçant en position réelle les différentes informations reçues. Une nombreuse littérature existe sur les différents procédés de migrations à laquelle on se référera pour plus d'informations. On différenciera toutefois les migrations. dites "après somme" qui s'effectue sur les traces somme et qui prennent en compte la seule déformation géométrique, et les migrations "avant somme". Les migrations avant somme s'effectuent sur chacune des traces de chacune des collections de traces élémentaires avant sommation, et ont théoriquement pour effet de mettre en phase, c'est-à-dire d'attribuer une même profondeur ou un même temps, à des signaux qui sont relatifs au même point de réflexion.

Une collection de traces élémentaires sur lesquelles une migration avant somme a été appliquée peut être considérée comme une "mini-section" élémentaire du sous-sol dans un plan d'axes de coordonnées distance X et de temps ou profondeur T sur laquelle les signaux relatifs à un même réflecteur se trouvent alignés horizontalement. La qualité d'une telle migration appliquée à des données réelles dépend en fait fortement de la connaissance de la vitesse de propagation de l'onde dans chacune des couches du sous-sol, dite "vitesse d'intervalle". Des erreurs sur les vitesses d'intervalle provoquent des déformations des alignements qui ne sont plus de ce fait horizontaux de sorte que le signal obtenu après sommation horizontale est dégradé, cette dégradation pouvant conduire à des erreurs ou des difficultés d'interprétation.

Un autre but de la sommation en sismique réflexion est d'améliorer le rapport signal/bruit, la sommation renforçant l'amplitude des signaux significatifs, présents sur chacune des traces, en phase théoriquement, et atténuant, par sommation destructive, le bruit aléatoire d'une trace à l'autre.

Ce but ne sera évidemment pas atteint si les signaux ne sont pas en phase, une sommation effectuée dans de mauvaises conditions, c'est-à-dire suivant une ligne correspondant à un alignement théorique et non pas à l'alignement réel, ayant pour effet de diminuer l'amplitude du signal somme ainsi que la fréquence apparente, tandis que si l'on déforme la ligne suivant laquelle la sommation s'effectue, pour prendre en compte ces déphasages des signaux d'une trace élémentaire à l'autre, ces effets n'ont pas lieu et le signal somme obtenu est optimal.

Le présent procédé de traitement permet de remédier à l'inconvénient de la sommation horizontale classique grâce à la prise en compte lors de la sommation -laquelle n'est plus horizontale- de la configuration géométrique réelle des alignements de signaux sur les collections élémentaires avant somme, et ainsi d'obtenir une somme optimale même dans les cas où les signaux associés à un même réflecteur sur lesdites collections ne sont pas alignés horizontalement.

Le procédé de traitement de signaux enregistrés à la surface au sol lors de l'exploration d'un milieu par sismique réflexion selon l'invention est du type consistant à sommer des collections d'enregistrements élémentaires obtenues par la technique dite de couverture multiple après leur avoir appliqué un traitement de sorte que sur chacune des collections, référencée dans un plan d'axes de coordonnées distance X et temps ou profondeur T, les réflexions du sous-sol apparaissent comme des linéations subhorizontales associées à des extrema des enregistrements corrélant entre eux.

Le procédé selon l'invention est caractérisé en ce que pour chacune des collections :

– on effectue dans un premier temps la sommation des échantillons des enregistrements élémentaires associés au même temps pour obtenir une trace somme classique,
– on relève sur cette trace somme classique les cotes $T_i$ pour lesquelles son amplitude présente des pics $P_i$. Les pics pris en compte seront par exemple tous les extrema de la trace ou seulement les maxima de l'enveloppe de là trace somme redressée,

– on effectue le pointé des linéations présentes sur la collection,
– on sélectionne sur la collection, selon un processus donné, à l'intérieur de chaque plage temps $PL_i$ de largeur prédéterminée $T_i - \Delta T_i$, $T_i + \Delta' T_i$, entourant chacune des cotes $T_i$, et interceptant un certain nombre de linéations, au plus une de ces linéations considérée comme la plus représentative de la plage étudiée, $L_i$,
– on définit un couloir de sommation de largeur prédéterminée entourant une courbe pivot passant par les points $P_j$ de coordonnées $T_j$ appartenant chacun à une linéation sélectionnée $L_j$,
– on effectue, à l'intérieur de ce couloir la sommation des échantillons situés le long des linéations pour obtenir une trace somme selon le procédé dont l'amplitude au temps $T_j$ est le résultat de la sommation le long de la linéation $L_j$ et l'amplitude à un temps $T$ compris entre deux temps $T_j$ et $T_j+1$, le résultat de la sommation des échantillons situés sur une linéation obtenue par interpolation entre les linéations sélectionnées successives $L_j$ et $L_j+1$.

Selon une variante, le procédé de traitement selon l'invention est caractérisé en ce que le processus de sélection de la linéation la plus représentative de chacune des plages $PL_i$ est composé de deux étapes, la première étape consistant à sélectionner sur chacune des plages au moins deux linéations conformément à un critère donné, cette sélection s'effectuant d'une part en commençant par la cote $T_l$ associée au pic d'amplitude maximum en valeur absolue de la trace somme classique et en terminant, dans l'ordre, par la cote $T_k$ associées au pic d'amplitude minimum en valeur absolue pris en compte sur la trace somme classique, et d'autre part en ne prenant pas en compte des linéations dès lors qu'elles ont déjà été sélectionnée une fois, la deuxième étape consistant à choisir une seule de ces deux linéations ou plus, sélectionnée suivant un critère prédéterminé prenant en compte au moins les linéations sélectionnées sur la plage supérieure ou inférieure à celle de la sélection.

Selon une autre variante, le procédé de traitement selon l'invention est caractérisé en ce que la sélection s'effectue conformément à un critère donné, cette sélection s'effectuant d'une part en commençant par la cote $T_l$ associée au pic d'amplitude maximum en valeur absolue pris en compte sur la trace somme et en terminant, dans l'ordre, par la cote $T_k$ associée au pic d'amplitude minimum en valeur absolue pris en compte sur la trace somme, et d'autre part en ne prenant pas en compte les linéations dès lors qu'elles ont déjà été sélectionnées une fois.

De façon préférentielle, le critère de sélection d'une linéation sur une plage porte sur la moyenne des amplitudes absolues des extrema associés à la linéation laquelle moyenne doit être supérieure à la moyenne des amplitudes absolues des extrema associés aux linéations de la plage non sélectionnées.

De façon plus générale, le procédé selon l'invention peut trouver des applications dans tout domaine, en particulier en traitement d'image, dès lors que l'on cherche à conserver l'information contenue sur une image à deux dimensions représentant les valeurs prises par un paramètre suivant deux axes, lesdites valeurs s'organisant suivant des linéations, ou dès lors que l'on travaille sur des collections d'enregistrements redondants pour augmenter le rapport signal/bruit de l'information contenue sur ces enregistrements.

Le procédé selon l'invention sera très facile à mettre en oeuvre si l'on fait appel à des techniques de pointé automatique et que l'on utilise l'ordinateur non seulement comme moyen de stockage et de visualisation, mais aussi comme moyen d'analyse d'image dans la mesure où chaque mini section sismique peut être considérée comme une image à deux dimensions I(k,l) où l'indice k réprésente en ordonnées le temps ou la profondeur et l'indice l en abscisses le numéro de l'enregistrement sismique ou une distance, I étant l'amplitude du signal. Par exemple, à supposer que l'on représente I, l'amplitude, par différents niveaux de gris, la détection de linéations peut se ramener à un problème de détection de bord ou de "contouring", le calcul de valeurs caractérisant chaque linéation pouvant s'effectuer en même temps que le pointé.

Dans ces conditions, appliqué par exemple à des collections "point récepteur commun" sur lesquelles une migration avant somme a été appliquée, le procédé de traitement selon l'invention permet l'obtention, grâce à la prise en compte des défauts dus aux imperfections du modèle de vitesses utilisé pour la migration avant somme et pour un coût équivalent, d'une section sismique de bien meilleure qualité et à plus haute résolution que celle effectuée par sommation classique.

D'autres avantages et caractéristiques apparaîtront à la lecture de la description d'un mode de réalisation de la présente invention, concernant l'obtention d'une section sismique à partir d'enregistrements élémentaires sur lesquels une migration avant somme a été effectuée, se référant aux dessins annexés sur lesquels :

– la figure 1 représente l'image d'une collection CDPG (Common Depth Point Gather) d'enregistrements sismiques devant être sommés en fonction d'une distance (en mètres, en abscisses) et d'un temps (en millisecondes, en ordonnées) sur laquelle une migration avant somme a été effectuée,

– la figure 2 représente la trace somme horizontale correspondant à la collection de la figure 1,

– la figure 3 montre le résultat d'un pointé des horizons sismiques effectué sur la collection de la figure 1,

– la figure 4 représente les linéations sélectionnées, ainsi que la courbe pivot du couloir de sommation pour la collection de la figure 1,

– la figure 5 représente la trace somme obtenue par le procédé selon l'invention correspondant à la collection de la figure 1 en prenant en compte le pointé de la figure 4,

– la figure 6 montre une section sismique complète obtenue à partir du procédé classique avec sommation horizontale,

– la figure 7 montre cette même section obtenue à partir du procédé selon l'invention.

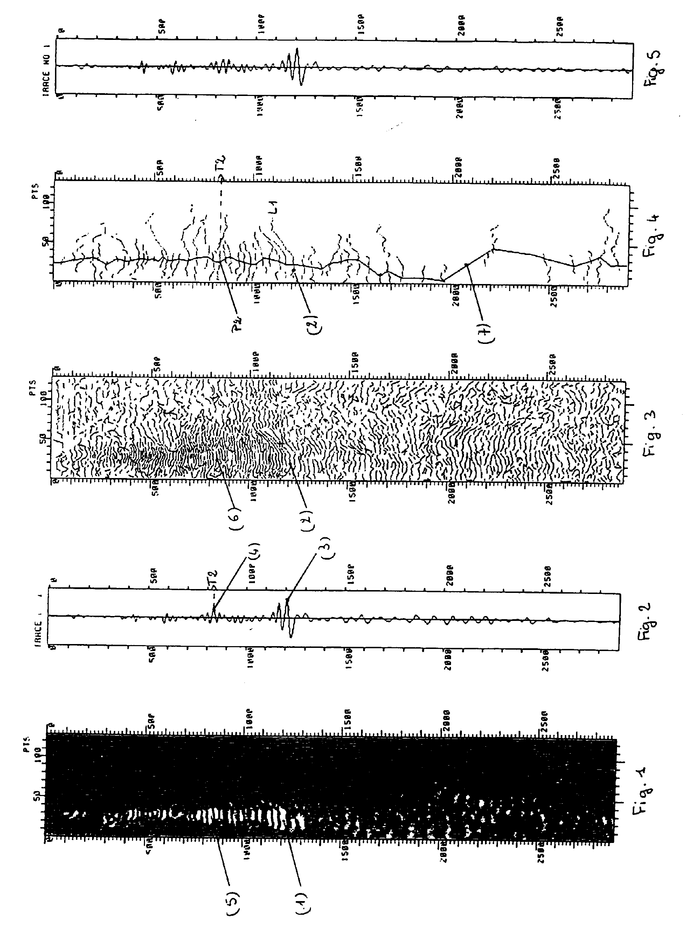

Chaque enregistrement constituant une colonne de l'image de la figure 1 est le résultat d'un traitement du signal préliminaire effectué sur les enregistrements élémentaires enregistrés à la surface du sol, comprenant plusieurs opérations successives dont, en utilisant les termes bien connus par les sismiciens en exploration pétrolière, les corrections statiques, les corrections dynamiques et une migration "avant somme".

Le nombre de traces appartenant à chacune des collections est fonction des caractéristiques géométriques du dispositif déroulé à la surface du sol et en particulier de ce qu'on appelle la "couverture" c'est-à-dire le nombre de traces élémentaires enregistrées que l'on peut associer à la même verticale du sous-sol en cas de structures horizontales, et des caractéristiques de la migration avant somme choisie.

Les traitements effectués sur les traces élémentaires ont pour but la simulation d'un enregistrement émis et reçu en un même point de la surface du sol, l'énergie émise se propageant selon la verticale passant par ce point.

Le choix de traitements effectué parmi la panoplie des traitements offerts au géophysicien pour lui permettre d'aboutir à une collection telle celle de la figure 1 n'a pas d'importance pour l'application du procédé selon l'invention.

La figure 1 comprend 128 traces que l'on peut considérer comme autant d'images sismiques plus ou moins bruitées d'un même verticale, construites à partir d'autant de traces élémentaires distinctes associées à des points d'émission et/ou de réception différents en surface.

Les linéations visibles sur la figure 1, telles la linéation (1), devraient théoriquement être horizontales puisqu'elles définissent chacune un même point du sous-sol caractérisé par le même temps de propagation verticale. Elles ne le sont pas, du fait du bruit présent sur les enregistrements élémentaires, toujours très fort en sismique réflexion au point d'occulter souvent le signal significatif, et également de l'imperfection du modèle des vitesses de propagation utilisé pour les traitements effectués sur les traces élémentaires.

Pour définir les linéations suivant lesquelles la sommation optimisée suivant le procédé de l'invention doit être effectué, il est nécessaire d'effectuer sur la collection d'enregistrements élémentaires un pointé des différentes linéations présentes sur l'image. Il existe sur le marché plusieurs procédés de pointé d'horizons sismiques qui peuvent être ici employés indifféremment.

La figure 3 montre le résultat d'un tel pointé développé au sein de la Société Nationale Elf Aquitaine (Production) et effectué à l'aide de l'ordinateur. Sur cette figure, par exemple, la ligne (2) correspond au résultat du pointé de la linéation (1) de la figure 1. Chaque ligne de la figure 3 correspond à la frontière entre une plage où la pente du signal est positive et une autre plage où la pente du signal est négative. En d'autres termes, ces lignes indiquent les lieux des extrema, associés chacun à des pics -positif ou négatif- du signal, et corrélables entre eux. Elles sont interrompues lorsqu'il n'a pas été possible de trouver sur deux traces voisines des signaux dont les pics corrèlent, c'est-à-dire sont associés à des temps suffisamment proches. Il est évident que toutes les lignes de la figure 3 ne sont pas significatives, et que nombre d'entre elles sont associées à du bruit.

Il faut donc sélectionner sur une telle image celles des lignes résultant du pointé qui sont effectivement associées à des réflexions physiques sur un réflecteur du sous-sol. On peut présumer que les lignes longues et associées à des pics de forte amplitude, telle la ligne (2) font partie des lignes potentiellement significatives, et qu'on peut leur faire correspondre un pic sur la trace somme horizontale même si celle-ci n'est pas optimale. C'est ainsi, par exemple, que les pics (3), (4) de la figure 2 qui représente l'amplitude de la trace obtenue par sommation horizontale des enregistrements élémentaires de la figure 1, peuvent être considérés comme la marque des linéations (1), (5) de la figure 1 associées aux pointés (2), (6) de la figure 3.

Cette sommation horizontale est effectuée pour chacune des collections d'enregistrements de façon à obtenir autant de traces sommes équivalentes à celles de la figure 2, que de collections.

Sur chacune de ces traces somme, les pics associés à des extrema d'amplitude sont sélectionnés et classés par amplitudé absolue décroissante, chaque pic Pi étant caractérisé par son amplitude Ai, le temps ou la profondeur correspondant Ti, et son numéro d'ordre i. Le relevé des extrema peut s'effectuer sur l'amplitude en valeur absolue de la trace somme, les pics d'amplitude positive et négative étant pris en compte aussi bien les uns que les autres. Le classement peut également porter uniquement sur les pics associés à des débuts de phase de régression : aux pics sélectionnés et classés correspond alors également un maximum de la courbe enveloppe de la trace somme redressée.

On peut concevoir, suivant le problème posé, d'autres modes de sélection des pics, les deux exemples donnés ici ne devant pas être considérés comme des limites du procédé selon l'invention.

Dans l'exemple de réalisation donné ici en exemple, le classement des extrema a été effectué sur les pics associés à des phases de régression, correspondant au second mode de sélection donné précédemment. Dans ce cas précis, les pics (3), (4) de la figure 2 sont les premiers pris en compte, successivement et dans cet ordre. A ces deux pics sont associés leurs amplitudes A1, A2 et leur temps T1, T2. Au pic de plus faible amplitude $P_R$, R étant le nombre total de pics à classer sur la trace somme, sera associé l'amplitude AR et le temps $T_R$.

L'étape suivante du traitement consiste à sélectionner les linéations que l'on considère comme les plus représentatives de la collection au vu d'un certain critère. Le critère utilisé dans l'exemple de réalisation traité ici est l'amplitude moyenne, la linéation jugée la plus représentative étant celle qui a la plus forte amplitude moyenne, l'amplitude moyenne étant ici définie comme la moyenne des amplitudes des pics $p_{jk}$, k étant l'indice de la trace élémentaire dans la collection, constituant la linéation lj.

La sélection des linéations s'effectue sur des plages temps PLi entourant chacune des côtes Ti pour lesquelles un extremum Pi a été relevé et classé, i étant le numéro d'ordre, variant de 1 à R, de l'extremum Pi après classement par ordre d'amplitude décroissante. Les largeurs de plage sont définies au préalables. Pour plus de simplicité, on a choisie ici une largeur I constante, égale à 16 millisecondes et centrée sur chacune des cotes Ti : la première plage traitée est donc la plage de largeur I centrée sur le temps T1 du pic sélectionné de plus forte amplitude, et limitée par les temps T1-1/2 et T1+1/2. L'amplitude moyenne peut être calculée en prenant en compte uniquement les pics $p_{jk}$ contenus dans la plage d'étude PLi. On choisira préférentiellement une largeur de plage telle que le quart de la période moyenne des signaux de la trace somme lui soit supérieure, mais on peut également envisager de choisir I très grand pour prendre en compte les linéations dans leur longueur totale. La largeur des plages temps peut être variable en fonction de T : on peut par exemple envisager de l'adapter à la pseudo-période du pic Pi. De même, il n'est pas indispensable que la plage soit centrée sur le temps Ti.

Dans la réalité, au moins une linéation traverse chacune des plages temps, plus vraisemblablement deux ou plus. Ces linéations lj, j étant ici un indice variant de 1 à S, S étant différent de R, passent par des extrema de traces élémentaires corrélables d'une trace à l'autre. On calcule pour chacune d'elles l'amplitude moyenne des maximum corrélés contenus dans la plage d'étude. Par exemple, si la linéation lj passe par les quatre enregistrements élémentaires 1 à 4 dans la plage de temps étudiée, et que aj1, aj2, aj3, aj4 sont les valeurs des maximum associés sur chacune de ces quatre traces reliés entre eux par le programme de pointé, on effectue la moyenne de ces quatre valeurs aj1, aj2, aj3, aj4 que l'on attribue à la linéation lj. Une fois ce travail effectué pour chaque linéation interceptant la plage temps, on sélectionne parmi elles la linéation ou les linéations (par exemple deux) auxquelles sont attribuées la ou les amplitudes moyennes les plus élevées. On peut parvenir au but final qui est la sélection de la linéation élémentaire la plus représentative par plage de temps sélectionnée, en une ou plusieurs étapes de tri successives, chaque étape consistant à sélectionner un nombre théorique de linéations, qui peut-être ne sera pas atteint et allant diminuant avec les étapes, sur chacune des plages. Les critères de sélection sont multiples et le critère d'amplitude moyenne utilisé pour le traitement des données réelles de la figure 1 n'est qu'un exemple : on peut en particulier vouloir prendre en compte également la longueur des linéations.

La figure 4 montre le résultat de la sélection effectuée sur le pointé de la figure 3 en deux étapes. On a dans une première étape sélectionné sur chacune des plages PLi par numéro d'ordre croissant les deux linéations interceptant ladite plage d'amplitude moyenne les plus élevées.

Après avoir travaillé sur la plage centrée sur le temps T1 du pic P1 de plus forte amplitude, on a effectué ce même travail pour la plage de la largeur l, centrée sur le temps T2 du pic P2 de plus forte amplitude après celle du pic P1, et ainsi de suite jusqu'à la plage associée au pic PR de plus faible amplitude. Aucune linéation lj n'a été sélectionnée deux fois : à supposer par exemple qu'une première plage de travail jouxte ou se superpose légèrement à une seconde plage 1 et que quatre linéations $l_1$, $l_2$, $l_3$, $l_4$, interceptent cette seconde plage, la linéation $l_2$ ayant déjà été sélectionnée pour la première plage, le choix des deux linéations les plus représentatives de la seconde plage s'effectuera entre les linéations $l_1$, $l_3$, $l_4$.

On a ensuite, dans une seconde étape, choisit celle des deux linéations devant être sélectionné in fine.

Dès lors qu'une linéation ne peut être sélectionnée qu'une fois dans un processus de sélection à plusieurs étapes, on conçoit que pour certaines plages, il ne sera pas possible d'atteindre le nombre théorique de linéations par plage. Il est même possible que pour certaines plages aucune linéation ne puisse être sélectionnée : le nombre de linéations finalement sélectionnées sera alors inférieur au nombre R de pics pris en compte sur la trace somme classique.

Si le nombre théorique de linéations à sélectionner dans un premier temps par plage est supérieur à un, un deuxième tri sera nécessaire pour sélectionner celle des linéations qui sera retenue in fine.

Plusieurs façons de choisir la linéation devant être sélectionnées in fine sur la plage temps PLi peuvent être envisagées par l'homme de l'art sans que l'on sorte du cadre de l'invention.

De façon préférentielle, on fait intervenir le résultat du premier tri des linéations sur au moins l'une ou l'autre des plages directement supérieure (associée à un temps Ti plus court) ou directement inférieure (associée à un temps Ti plus long).

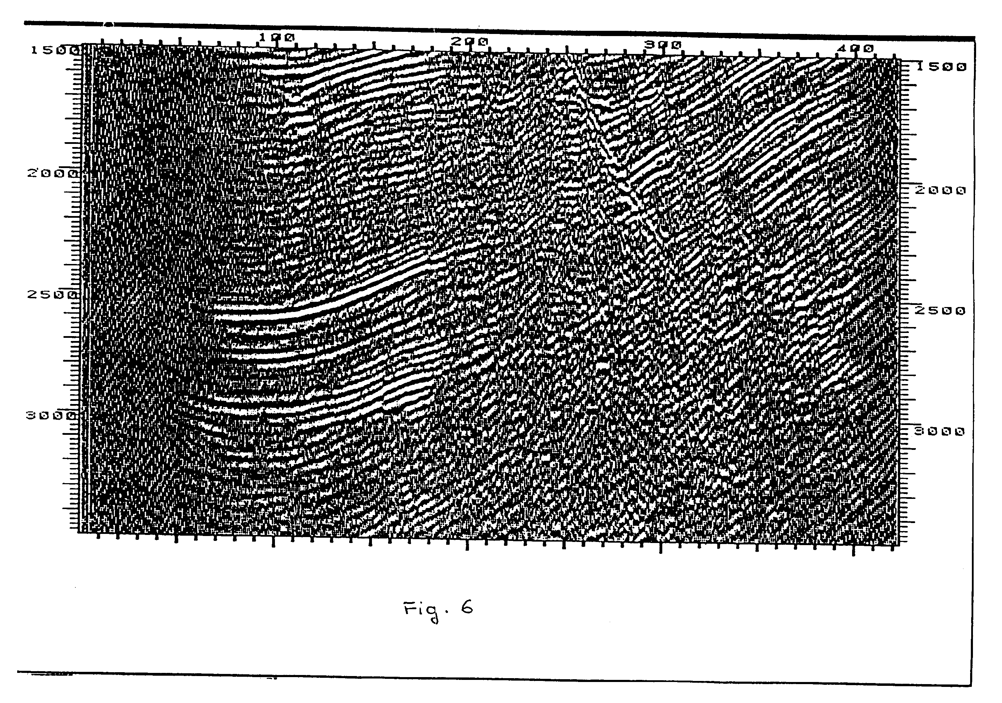

Un moyen simple, employé dans l'exemple décrit ici, pour sélectionner celle de deux linéations devant être choisie in fine est le suivant : Ai et Bi étant les amplitudes moyennes des deux linéations retenues lors du premier tri, on choisit celle dont l'amplitude moyenne sommée avec l'amplitude moyenne de la linéation sélectionnée in fine sur la plage précédente est la plus élevée. La sélection peut s'effectuer en commençant par la plage associée au temps le plus court et en terminant par la plage associée au temps le plus long. Pour chaque plage PLi, on peut définir un point particulier Pi appartenant à la linéation sélectionnée in fine et de coordonnées en T, Ti. La figure 5 montre le résultat de la sélection finale réalisée en deux étapes successives à partir du pointé de la figure 2.

La jonction des points Pi par numéro d'ordre i successifs permet de construire une ligne brisée appelée courbe pivot que l'on peut aussi définir comme une courbe d'énergie optimale. On a représenté sur la figure 4 une telle courbe (7).

On délimite ensuite une zone, de largeur prédéfinie, entourant la courbe pivot. Seuls les échantillons des traces compris dans cette zone seront pris en compte pour la sommation, de sorte que la zone entourant la courbe pivot définit un véritable couloir de sommation. La largeur du couloir pourra s'exprimer en nombre de traces, ce nombre étant suffisamment grand (par exemple 15 traces pour une collection de 48 traces ou plus), le couloir étant dans ce cas délimité par deux lignes brisées identiques à la courbe pivot mais décalées l'une et l'autre par rapport à celle-ci suivant l'axe des abscisses X. La largeur du couloir de sommation peut être constante ou variable -préférentiellement décroissante- en fonction du temps ou de la profondeur T. Le couloir peut être centré sur la courbe d'énergie optimale, le même nombre de traces étant pris en compte de part et d'autre de la trace pivot au temps Ti à laquelle appartient le point Pi, ou au contraire, décentrée.

La largeur du couloir peut encore être choisie très grande -au moins égale au nombre de traces de la collection- si l'on veut prendre en compte les linéations dans leur entier.

La sommation s'effectue à l'intérieur du couloir de sommation, suivant les linéations, l'amplitude de la trace somme obtenue à l'aide du procédé selon l'invention au temps Ti étant la somme (pondérée ou non) des amplitudes des pics appartenant à la linéation Li passant par le point Pi d'une part et compris dans le couloir de sommation d'autre part. L'amplitude de la trace somme pour un temps T compris entre les temps Ti et Ti+1 sera égale à la somme des échantillons compris dans le couloir de sommation et situés sur une linéation créée par l'interpolation entre les linéations Li et Li+1. Soit P le point d'ordonnée T appartenant au segment (Pi, Pi+1) de la courbe pivot, et R le rapport entre les distances entre les points P et Pi d'une part, P et Pi+1 d'autre part. L'interpolation est telle que ce rapport de distances entre la linéation interpolée passant par P et les linéations Li et Li+1 est conservé et égal à R le long de tout segment parallèle au segment (Pi, Pi+1) limité par les deux linéations Li et Li+1.

La figure 5 montre la trace somme obtenue par le procédé selon l'invention, tel que décrit ci-dessus, appliqué à la collection de la figure 1. La sommation a été effectuée à partir des linéations de la figure 4, dans un couloir de sommation centré sur la courbe pivot et de demi-largeur égale à 7 traces. La trace somme de la figure 5 est à comparer avec la trace somme de la figure 2 obtenue en effectuant la sommation horizontale des échantillons de la collection de la figure 1 associés au même temps.

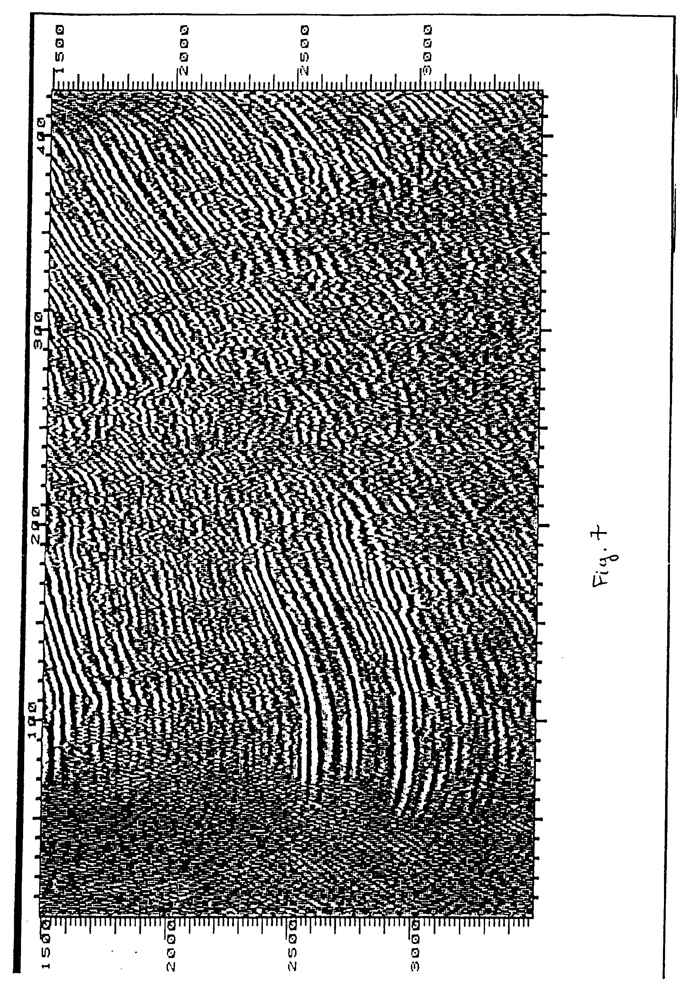

Les figures 6 et 7 permettent la comparaison du traitement selon l'invention (figure 7) avec le traitement classique avec sommation horizontale (figure 6) sur une section sismique complète constituée de la juxtaposition de traces sommes du type de celle des figures 3 ou 4, la trace de la figure 2 étant la 1ère trace de la section de la figure 6 et la trace de la figure 5 la 1ère trace de la figure 7. Hormis le procédé de sommation, tous les traitements appliqués aux enregistrements élémentaires à partir desquels les sections des figures 6 et 7 ont été construites, sont identiques. On notera une nette amélioration du rapport signal/bruit sur la figure 7.

De nombreuses variantes à ces traitements décrits ci-dessus à titre d'exemple sont accessibles à l'homme de l'art sans que l'on sorte du cadre de l'invention.

**Revendications**

1. Procédé de traitement de signaux enregistrés à la surface du sol lors de l'exploration d'un milieu par sismique réflexion, pour l'obtention de section sismique, du type consistant à sommer des collections d'enregistrements élémentaires obtenues par la technique dite de couverture multiple, lesdits enregistrements ayant subi un traitement de sorte que sur chacune des collections, référencée dans un plan d'axes de coordonnées X en abscisses, exprimant une distance et de coordonnées T en ordonnées, exprimant un temps ou une profondeur, les réflexions du sous-sol apparaissent comme des linéations subhorizontales associées à des extrema des enregistrements corrélant entre eux, caractérisé en ce que pour chacune des collections,

    – on effectue dans un premier temps la sommation des échantillons des enregistrements élémentaires associés au même temps pour obtenir une trace somme classique,

    – on relève sur cette trace somme classique les cotes Ti pour lesquelles son amplitude présente des pics Pi,

    – on effectue le pointé des linéations présentes sur la collection,

    – on sélectionne sur la collection, selon un processus donné, à l'intérieur de chaque plage temps PLi de largeur prédéterminée Ti-$\Delta$Ti, Ti+$\Delta$'Ti, entourant chacune des cotes Ti, et interceptant un certain nombre de linéations, au plus une de ces linéations considérée comme la plus représentative de la plage étudiée, Li,

    – on définit un couloir de sommation de largeur prédéterminée entourant une courbe pivot passant par les points Pj de coordonnées Tj appartenant chacun à une linéation sélectionnée Lj,

    – on effectue à l'intérieur de ce couloir la sommation des échantillons situés le long des linéations pour obtenir une trace somme selon le procédé dont l'amplitude au temps Tj est le résultat de la sommation le long de la linéation Lj et l'amplitude à un temps T compris entre deux temps Tj et Tj+1, le résultat de la sommation des échantillons situés sur une linéation obtenue par interpolation entre les linéations sélectionnées successives Lj et Lj+1.

2. Procédé de traitement selon la revendication 1 caractérisé en ce que le processus de sélection de la linéation la plus représentative de chacune des plages PLi est composé de deux étapes, la première étape consistant à sélectionner sur chacune des plages au moins deux linéations conformément à un critère donné, cette sélection s'effectuant d'une part en commençant par la cote T1 associée au pic d'amplitude maximum en valeur absolue de la trace somme classique et en terminant, dans l'ordre, par la cote Tk associée au pic d'amplitude minimum en valeur absolue de la trace somme classique, et d'autre part en ne prenant pas en compte des linéations dès lors qu'elles ont déjà été sélectionnées une fois, la deuxième étape consistant à choisir une seule de ces deux linéations ou plus, sélectionnée suivant un critère prédéterminé prenant en compte au moins des linéations sélectionnées sur la plage supérieure ou inférieure à celle de la sélection.

3. Procédé de traitement selon la revendication 1 caractérisé en ce que la sélection s'effectue conformément à un critère donné, cette sélection s'effectuant d'une part en commençant par la cote T1 associée au pic d'amplitude maximum en valeur absolue de la trace somme et en terminant, dans l'ordre, par la cote Tk associée au pic d'amplitude minimum en valeur absolue de la trace somme, et d'autre part en ne prenant pas en compte des linéations dès lors qu'elles ont déjà été sélectionnées une fois.

4. Procédé de traitement selon la revendication 2 ou 3 caractérisé en ce que le critère de sélection d'une linéation sur une plage porte sur la moyenne des amplitudes absolues des extrema associés à la linéation laquelle moyenne doit être supérieure à la moyenne des amplitudes absolues des extrema associés aux linéations de la plage non sélectionnées.

5. Procédé de traitement selon la revendication 1 caractérisé en ce que les pics pris en compte sont les extrema de la trace somme classique.

6. Procédé de traitement selon la revendication 1 caractérisé en ce que les pics pris en compte sont les maxima de l'enveloppe de la trace somme classique redressée.

**Patentansprüche**

1. Verfahren zur Verarbeitung von an der Erdoberfläche bei der Untersuchung eines Milieus durch seismische Reflexion aufgezeichneten Signalen zur Gewinnung eines seismischen Querschnitts derart, daß Erfassungen elementarer Aufzeichnungen summiert werden, die durch mehrfache Überdeckung gewonnen wurden, wobei die Aufzeichnungen derart verarbeitet wurden, daß auf jeder der Erfassungen, auf die in einer Achsenebene von Koordinaten X als Abszissen, die einen Abstand ausdrücken, und von Koordinaten T als Ordinaten, die eine Zeit oder eine tiefe ausdrücken, Bezug genommen ist, die Reflexion des Untergrunds als subhorizontale Linearstreckungen erscheinen, die Extrema der untereinander in Wechselbeziehung stehenden Aufzeichnungen zugeordnet sind, dadurch gekennzeichnet, daß für jede der Erfassungen

– man in einer ersten Zeit die Summation der Proben der derselben Zeit zugeordneten elementaren Aufzeichnungen durchführt, um eine klassische Summenspur zu erhalten,

– man über dieser klassischen Summenspur die Aufmaße Ti abnimmt, für die ihre Amplitude Scheitelwerte Pi darstellt,

– man das Markieren der über der Erfassung vorhandenen Linearstreckungen vornimmt,

– man aus der Erfassung gemäß einem gegebenen Prozeß im Inneren jedes Zeitbereichs Pli mit vorbestimmter Breite Ti-ΔTi, Ti+Δ'Ti, die jede der Ausmaße Ti umgibt und eine gewisse Anzahl von Linearstreckungen abfängt, höchstens eine von diesen Linearstreckungen, die betrachtet wurde, als die repräsentativste des untersuchten Bereichs Li auswählt,

– man einen Summationsgang mit vorbestimmter Breite festlegt, der eine Drehpunktkurve umgibt, die durch die Punkte Pj mit Koordinaten Tj geht, von denen jeder zu einer ausgewählten Linearstreckung Lj gehört,

– man im Inneren des Ganges die Summation der Proben durchführt, die sich längs der Linearstreckungen befinden, um gemäß dem Verfahren eine Summenspur zu erhalten, deren Amplitude zur Zeit Tj das Ergebnis der Summation längs der Linearstreckung Lj und deren Amplitude zu einer Zeit T, die zwischen zwei Zeiten Tj und Tj+1 liegt, das Ergebnis der Summation der Proben ist, die sich auf einer Linearstreckung befinden, die durch Interpolation zwischen den aufeinanderfolgenden ausgewählten Linearstreckungen Lj und Lj+1 erzielt wurden.

2. Verarbeitungsverfahren nach Anspruch 1, dadurch gekennzeichnet, daß der Auswahlprozeß der repräsentativsten Linearstreckung aus jedem der Bereiche Pli aus zwei Stufen zusammengesetzt ist, wobei die erste Stufe darin besteht, aus jedem der Bereiche wenigstens zwei Linearstreckungen gemäß einem gegebenen Kriterium auszuwählen, wobei diese Auswahl einerseits dadurch erfolgt, daß man mit dem Aufmaß T1 beginnt, das dem Scheitelwert des Amplitudenmaximums als absolutem Wert der klassischen Summenspur zugeordnet ist, und der Reihe nach mit dem Aufmaß Tk endet, das dem Scheitelwert des Amplitudenmimimuns als absolutem Wert der klassischen Summenspur zugeordnet ist, und andererseits dadurch, daß man Linearstreckungen nicht in Betracht zieht, sobald sie schon einmal ausgewählt worden sind, und wobei die zweite Stufe darin besteht, eine einzige dieser zwei Linearstreckungen oder mehr zu wählen, die gemäß einem vorbestimmten Kriterium ausgewählt wird, wobei wenigstens Linearstreckungen in Betracht gezogen werden, die aus dem Bereich ausgewählt sind, der höher oder niedriger als der der Auswahl liegt.

3. Verarbeitungsverfahren nach Anspruch 1, dadurch gekennzeichnet, daß die Auswahl gemäß einem gegebenen Kriterium erfolgt, wobei die Auswahl einerseits dadurch erfolgt, daß man mit dem Aufmaß T1 beginnt, das dem Scheitelwert des Amplitudenmaximums als absolutem Wert der Summenspur zugeordnet ist, und daß man der Reihe nach mit dem Aufmaß Tk endet, das dem Scheitelwert des Amplitudenmimimums als absolutem Wert der Summenspur zugeordnet ist, und andererseits dadurch, daß man Linearstreckungen nicht in Betracht zieht, sobald sie schon einmal ausgewählt worden sind.

4. Verarbeitungsverfahren nach Anspruch 2 oder 3, dadurch gekennzeichnet, daß das Auswahlkriterium einer Linearstreckung aus einem Bereich auf dem Mittelwert der absoluten Amplituden der Extrema beruht, die der Linearstreckung zugeordnet sind, wobei dieser Mittelwert größer sein muß als der Mittelwert der absoluten Amplituden der Extrema, die den nicht ausgewählten Linearstreckungen des Bereichs zugeordnet sind.

5. Verarbeitungsverfahren nach Anspruch 1, dadurch gekennzeichnet, daß die in Betracht gezogenen Scheitelwerte die Extrema der klassischen Summenspur sind.

6. Verarbeitungsverfahren nach Anspruch 1, dadurch gekennzeichnet, daß die in Betracht gezogenen Scheitelwerte die Maxima der Hüllkurve der gleichgerichteten klassischen Summenkurve sind.

## Claims

1. Method of processing signals recorded at the earth's surface during the exploration of an area by seismic reflection to obtain seismic section, said method being of the type consisting in summing collections of elementary recordings obtained by the multiple cover technique, the said recordings having undergone a processing such that in each of the collections, referenced in a plane having coordinate axis of X in abscissas, expressing a distance, and of T in ordinates, expressing a time of a depth, the subterranean reflections appear as sub-horizontal lineations associated with peaks of the recordings correlating with one another, and being characterised in that, it comprises for each of the collections :
   – summing in a first stage, the samples of the elementary recordings associated with a same time in order to obtain a conventional sum trace ;
   – reading onto this conventional sum trace, the values Ti for which amplitude peaks Pi occur ;
   – plotting the lineations in the collection ;
   – selecting from the collection, according to a given process, within each time range PLi of predetermined width Ti-$\Delta$Ti, Ti+$\Delta$'Ti, surrounding each of the values Ti and intercepting a certain number of lineations, at the most one of these lineations considered as the most representative of the range Li under consideration ;
   – defining an addition corridor of a predetermined width, incorporating a pivot curve passing via the points Pj of the coordinates Tj each belonging to one selected lineation Lj ;
   – summing within the addition corridor, the samples situated along the lineations to obtain a sum trace according to the procedure in which the amplitude at the time Tj is the result of summing along the lineation Lj and the amplitude at one time T between two times Tj and Tj+1, the result of the summing of samples situated on one lineation obtained by interpolation between the selected successive lineations Lj and Lj+1.

2. Method of processing according to Claim 1, characterised in that the process of selection of the most representative lineation of each of the ranges PLi is comprised of two stages, the first stage consisting of selecting, from each of the ranges, at least two lineations conforming to a given criterion, this selection being effected on the one hand by starting with the, value T1 associated with the peak of maximum amplitude in absolute value of the conventional sum trace and ending, in sequence, with the values Tk associated with the peak of minimum amplitude in absolute value of the conventional sum trace, and on the other hand by not taking into account lineations when they have already been selected once, the second stage consisting of choosing only one of the two or more lineations selected according to a predetermined criterion taking into account at least lineations selected from the area above or below that of the selection.

3. Method of processing according to Claim 1, characterised in that the selection is effected according to a given criterion, this selection being effected on the one hand by starting with the value T1 associated with the peak of maximum amplitude in absolute value of the sum trace and ending, in sequence, with the value Tk associated with the peak of minimum amplitude in absolute value of the sum trace, and on the other hand in not taking into account lineations when they have already been selected once.

4. Method of processing according to Claim 2 or 3, characterised in that the selection criterion for a lineation from a range, is based on the average of the absolute amplitudes of the peaks associated with the lineation, this average having to be greater than the average of the absolute amplitudes of the peaks connected to the non-selected lineations of the area.

5. Method of processing according to Claim 1, characterised in that the peaks taken into account are the peaks of the conventional sum trace.

6. Method of processing according to Claim 1, characterised in that the peaks taken into account are the maxima of the envelope of the corrected conventional sum trace.

Fig. 5

Fig. 4

Fig. 3

Fig. 2

Fig. 1

Fig. 6

Fig. 7